# EUROPÄISCHE PATENTSCHRIFT

(11) **EP 2 754 826 B1**
(45) Veröffentlichungstag und Bekanntmachung des Hinweises auf die Patenterteilung: **15.05.2024**
(21) Anmeldenummer: 14000034.0
(22) Anmeldetag: 07.01.2014
(51) Int. Cl.: E05F 15/608

(54) **Antriebseinheit für eine Karusselltür in einer flachen, scheibenförmigen Bauform**
Drive unit for a revolving door in a flat, disc-shaped form
Unité d'entraînement pour une porte à tambour plate en forme de disque

(30) Priorität: 14.01.2013 DE 102013000421
(43) Veröffentlichungstag der Anmeldung: 16.07.2014
(73) Patentinhaber: dormakaba Deutschland GmbH, 58256 Ennepetal (DE)
(72) Erfinder: Kissler, Stefan, 51379 Leverkusen (DE); Schmitz, Thomas, 50389 Wesseling (DE); Busch, Sven, 44227 Dortmund (DE)
(74) Vertreter: Balder IP Law, S.L.

(56) Entgegenhaltungen:
- WO-A1-2006/005438
- JP-A- H0 711 838
- US-A- 4 763 053

## Beschreibung

Die vorliegende Erfindung betrifft eine Antriebseinheit für eine Karusselltür mit einem elektronisch kommutierten Vielpolmotor, wobei der Vielpolmotor eine Anzahl von Spulenelementen und Magnetelementen aufweist und eine flache Grundstruktur besitzt. Weiterhin richtet sich die Erfindung auf die Anordnung einer solchen Antriebseinheit an einer Karusselltür sowie auf ein Verfahren zur Anordnung der Antriebseinheit.

### STAND DER TECHNIK

Die DE 10 2010 024 108 A1 zeigt eine gattungsbildende Antriebseinheit für eine Karusselltür mit einem elektronisch kommutierten Vielpolmotor, und der Vielpolmotor ist flach ausgebildet und weist eine runde Grundstruktur auf. Der Vielpolmotor besitzt eine Rotationsachse, die mit der Rotationsachse des Drehkreuzes der Karusselltür zusammenfällt. Ähnliche Antriebskonzepte sind auch aus JPH0711838A oder US4763053A bekannt.

Die Ausbildung einer Antriebseinheit für eine Karusselltür als elektronisch kommutierter Vielpolmotor ermöglicht eine besonders vorteilhafte Integration der Antriebseinheit in die Struktur der Karusselltür. Beispielsweise kann die Antriebseinheit bodenseitig montiert werden, und es ist kein großer Aufnahmeraum zur Aufnahme der Antriebseinheit im Rohbau eines Gebäudes notwendig. Die flache Ausführung der Antriebseinheit resultiert insbesondere daraus, dass der elektronisch kommutierte Vielpolmotor direkt mit dem Drehkreuz der Karusselltür verbunden werden kann, sodass die Antriebseinheit kein Getriebe aufweisen muss. Elektronisch kommutierte Vielpolmotoren besitzen jedoch Abtriebswellen, an die anzutreibende Komponenten, beispielsweise das Drehkreuz einer Karusselltür, angeordnet werden, um die Drehbewegung der Abtriebswelle auf die Komponenten zu übertragen.

Aus der EP 2 072 737 A2 ist eine weitere Antriebseinheit für eine Karusselltür mit einem Getriebe gezeigt, das einen Motor mit dem Drehkreuz der Karusselltür koppelt. Zwischen dem Getriebe und dem Drehkreuz wird eine Abtriebswelle verwendet, die auf das zwischen zwei Lagern drehbar gelagerte Drehkreuz wirkt. Die Abtriebswelle fällt dabei mit der Drehachse des Drehkreuzes zusammen, sodass sich durch das Getriebe in Wirkverbindung mit der Abtriebswelle die Bauhöhe der Antriebseinheit erhöht.

Neuere Karusselltüren erfordern Antriebseinheiten, die sehr flach ausgeführt sein müssen. Die Verwendung eines Getriebes in Verbindung mit einer Abtriebswelle bewirkt dabei bereits eine erhebliche Vergrößerung der Bauhöhe der Antriebseinheit in Drehachsenrichtung des Drehkreuzes, und insbesondere bei bodenmontierten Antriebseinheiten, jedoch auch bei deckenmontierten Antriebseinheiten führen große Bauhöhen häufig zu konstruktiven, jedoch auch zu ästhetischen Nachteilen bei der Einrichtung der Karusselltür beispielsweise in der Fassade eines Gebäudes.

### OFFENBARUNG DER ERFINDUNG

Aufgabe der Erfindung ist es, eine Antriebseinheit für eine Karusselltür, eine Anordnung einer Antriebseinheit in einer Karusselltür sowie eine Karusselltür mit einer solchen Antriebseinheit zu schaffen, die eine geringe Bauhöhe aufweist und einfach ausgeführt ist. Insbesondere ist es die Aufgabe der Erfindung, eine Antriebseinheit mit einem elektronisch kommutierten Vielpolmotor derart weiterzubilden, dass sich die Anordnung des Vielpolmotors in der Karusselltür und insbesondere an das Drehkreuz vereinfacht ausführen lässt.

Diese Aufgabe wird ausgehend von einer Antriebseinheit für eine Karusselltür gemäß den bekannten Merkmalen des Anspruches 1, ausgehend von einer Anordnung einer Antriebseinheit gemäß Anspruch 11 und ausgehend von einem Verfahren zur Anordnung einer Antriebseinheit gemäß Anspruch 14 mit den jeweils kennzeichnenden

Merkmalen gelöst. Vorteilhafte Weiterbildungen der Erfindung sind in den abhängigen Ansprüchen angegeben.

Die Erfindung schlägt eine Antriebseinheit für eine Karusselltür mit einem elektronisch kommutierten Vielpolmotor mit einer Anzahl von Spulenelementen und mit einer Anzahl von Magnetelementen vor, wobei der Vielpolmotor eine flach ausgebildete Grundstruktur aufweist und einen scheibenförmigen oder topfförmigen Statorteil umfasst, der an einem ruhenden Strukturbauteil anordbar ist, und ferner aufweisend einen scheibenförmigen oder topfförmigen Rotorteil, der planparallel zum Statorteil angeordnet ist und der mit einem Drehkreuz der Karusselltür antreibend verbindbar ist, wobei die Spulenelemente und die Magnetelemente im Bereich zwischen dem Statorteil und dem Rotorteil aufgenommen sind.

Die Erfindung geht dabei von dem Gedanken aus, den elektronisch kommutierten Vielpolmotor getriebelos mit dem Drehkreuz der Karusselltür zu verbinden und auf einfache Weise den Statorteil an einem ruhenden Strukturbauteil insbesondere der Karusselltür, jedoch beispielsweise auch an der Fassade, in der die Karusselltür eingebracht ist, anzuordnen. Der Rotorteil kann dabei auf ebenfalls einfache Weise direkt mit dem Drehkreuz der Karusselltür in direkter Verbindung gebracht sein und das Drehkreuz somit lagern. Dies wird dadurch möglich, dass der elektronisch kommutierte Vielpolmotor erfindungsgemäß im Wesentlichen aus zwei scheibenförmigen oder topfförmigen Teilen ausgeführt wird, und die Spulenelemente sowie die Magnetelemente werden zwischen den scheibenförmigen oder topfförmigen Teilen angeordnet. Der Statorteil und der Rotorteil bilden dabei gemeinsam zugleich das Gehäuse des Vielpolmotors. Insbesondere dadurch kann der elektronisch kommutierte Vielpolmotor besonders flach ausgebildet werden, wobei die scheibenförmigen oder topfförmigen Teile des Statorteils und des Rotorteils nicht zwingend den gleichen Durchmesser aufweisen müssen, und die Teile können sich gegenseitig radial überragen. Durch die scheibenförmige Grundstruktur des Vielpolmotors entsteht eine Art Drehteller, der sich auf vorteilhafte Weise zwischen dem Strukturbauteil und dem Drehkreuz der Karusselltür anordnen lässt. Das Strukturbauteil kann dabei sowohl deckenseitig als auch bodenseitig des Drehkreuzes vorhanden sein, sodass der Vielpolmotor sowohl deckenseitig als auch bodenseitig in oder an der Karusselltür anordbar ist. Ein besonderer Vorteil entsteht insbesondere durch die scheibenförmige oder tropfenförmige Ausbildung des Rotorteils, sodass dieser ohne weitere konstruktive Maßnahmen relativ zum Drehkreuz derart angeordnet werden kann, dass die Rotationsachse des Drehkreuzes eine Orthogonale auf der Erstreckungsebene des scheibenförmigen oder topfförmigen Rotorteils bildet, und die Rotationsachse des Rotorteils kann mit der Rotationsachse des Drehkreuzes zusammenfallen.

Vielpolmotoren sind auch unter der Bezeichnung der Torquemotoren bekannt und weisen grundsätzlich auf einer Kreisbahn angeordnete Spulenelemente auf, die ebenfalls auf einer Kreisbahn angeordneten Magnetelementen gegenüberstehen, beispielsweise innenseitig, außenseitig oder axial gegenüberstehend, sodass ein hochpoliger, drehmomentstarker Direktantrieb gebildet ist.

Das Verhältnis aus Höhe zu Durchmesser der im Wesentlichen runden, flach ausgebildeten Grundstruktur des elektronisch kommutierten Vielpolmotors weist erfindungsgemäß einen Wert von von wenigstens 1:5 und bevorzugt von 1:8 und mehr auf.

Das Verhältnis aus Höhe zu Durchmesser ergibt sich durch den parallelen Abstand des scheibenförmigen oder topfförmigen Statorteils zum scheibenförmigen oder topfförmigen Rotorteil des Vielpolmotors zum Durchmesser des Statorteils und/oder des Rotorteils. Dadurch, dass die Spulenelemente und die Magnetelemente zwischen dem Statorteil und dem Rotorteil angeordnet sind, lassen sich erst die Verhältnisse aus Höhe zu Durchmesser von bis zu 1:8 und mehr erreichen, und es hat sich gezeigt, dass sogar Grundstrukturen von Vielpolmotoren als Antrieb für Karusselltüren zum Einsatz kommen können, die ein Verhältnis aus Höhe zu Durchmesser von mehr als 1:12 erreichen können.

Die flache, scheibenförmige Bauform des Vielpolmotors bedingt dabei den positiven Effekt eines hohen erzielbaren, für den Betrieb einer Karusselltür auch notwendigen Drehmomentes, da der umlaufende Luftspaltradius zwischen den Spulenelementen und den Magnetelementen sehr groß gestaltet werden kann, insbesondere wenn der Vielpolmotor als Außenläufer ausgebildet ist.

Als scheibenförmige Gestalt wird vorliegend ein flacher Zylinder bezeichnet, bei dem der Durchmesser mehrfach größer ist als die Höhe. Beispielsweise kann der Vielpolmotor einen Durchmesser von ca. 500 mm und einen Höhe von ca. nur 40 mm aufweisen. Weiterhin ist das Merkmal einer scheibenförmigen Gestalt auch dann gegeben, wenn ein Vielpolmotor mit primär scheibenförmiger Gestalt absichtlich zu einer anderen ähnlichen Form umgestaltet wird. Beispielsweise kann ein flacher, mehreckiger Stumpf den an sich runden Statorteil oder Rotorteil umschließen oder beispielsweise der Statorteil oder auch der Rotorteil weist eine von einer Tellerform abweichende, unrunde Gestalt auf, beispielsweise einen flachen Kubus. Eine solche Umgestaltung kann erfolgen durch Umschließen des Rotorteils oder des Statorteils mit einem entsprechend geformten Gehäuse oder durch entsprechende Umgestaltung der Spulenkerne.

Ein weiterer, besonderer Vorteil der erfindungsgemäßen Antriebseinheit wird dadurch erreicht, dass eine Steuereinheit des Vielpolmotors ebenfalls zwischen dem Statorteil und dem Rotorteil aufgenommen werden kann. Die Steuereinheit kann dabei sowohl zur Leistungsbereitstellung, Kommutierung und Ansteuerung für den Grundbetrieb des Vielpolmotors, jedoch auch zur Signalverarbeitung für die Steuerung des Vielpolmotors ausgebildet sein, beispielsweise für eine Start/Stoppfunktion, eine Notausfunktion oder zur Drehüberwachung der Drehung des Drehkreuzes der Karusselltür. Durch die Integration der Steuereinheit des Vielpolmotors in den Raum zwischen dem Statorteil und dem Rotorteil entsteht eine anschlussfertige, modulartige Antriebseinheit, die lediglich noch mit einer Leistungsversorgung und mit Signalanschlüssen für beispielsweise ein Interfacemodul zur externen Steuerung der Antriebseinheit verbunden werden muss.

Ein weiterer wesentlicher Vorteil wird dadurch erreicht, dass der Rotorteil am Statorteil um eine insbesondere imaginäre Antriebsachse drehbar gelagert aufgenommen ist. Dabei kann zwischen dem Statorteil und dem Rotorteil wenigstens ein Lager, insbesondere wenigstens ein Axiallager und/oder wenigstens ein Radiallager, angeordnet werden. Der Statorteil befindet sich dabei in starrer Anordnung am Strukturbauteil, das Bestandteil der Karusselltür, beispielsweise des Rahmens der Karusselltür, jedoch auch Bestandteil der gesamten Fassade eines Gebäudes sein kann. An diesem ruhenden Statorteil kann der Rotorteil über eine Lageranordnung drehbar aufgenommen sein, und mit dem Rotorteil ist das Drehkreuz der Karusselltür verbindbar. Durch die Verwendung eines Axiallager kann der besondere Vorteil erreicht werden, dass vom Strukturbauteil auf das Drehkreuz Kräfte übertragen werden können, und beispielsweise kann das Strukturbauteil Bestandteil der oberseitigen Rahmenkonstruktion der Karusselltür sein, die über das Axiallager auf dem Drehkreuz abgestützt wird, ohne dass die Drehbeweglichkeit des Drehkreuzes durch die Last, die über den Vielpolmotor abgestützt wird, beeinträchtigt wird. Folglich kann insbesondere das Axiallager überdimensioniert ausgestaltet werden, und die Rahmenkonstruktion der Karusselltür kann so ausgelegt werden, dass eine Kraftübertragung durch das Drehkreuz und den Vielpolmotor in Richtung der Drehachse des Drehkreuzes, die mit der Antriebsachse des Vielpolmotors zusammenfällt, berücksichtigt werden kann. Das Drehkreuz kann dabei zwei, drei, vier oder mehr Drehflügel aufweisen und muss nicht zwingend die Grundform eines Kreuzes aufweisen.

Nach einer weiteren vorteilhaften Ausführungsform der Antriebseinheit können die Spulenelemente relativ zu den Magnetelementen radial innenliegend angeordnet sein. Die Spulenelemente können Wicklungskörper aufweisen, die so am Statorteil angeordnet sind, dass diese im Wesentlichen radial verlaufend zwischen dem Statorteil und dem Rotorteil ausgerichtet sind. Werden die Magnetelemente relativ zu den Spulenelementen radial außenseitig angeordnet, so entsteht eine vorteilhafte, insbesondere drehmomentstarke Ausgestaltung des Vielpolmotors, der hierdurch einen sogenannten Außenläufer bildet. Dies ist insbesondere dadurch begründet, dass der Magnetspalt zwischen den Magnetelementen und den Spulenelementen einen vergrößerten Abstand zur Antriebsachse der Antriebseinheit aufweist. Dadurch, dass die Magnetelemente kleinere Abmessungen aufweisen als die Spulenelemente, kann der Luftspalt zwischen den Spulenelementen und den Magnetelementen in Bezug auf die Antriebsachse nach außen gelegt werden, indem die Magnetelemente relativ zu den Spulenelementen außenseitig angeordnet werden, sodass der Luftspaltradius vergrößert ist.

Die Spulenelemente können ruhend am Statorteil angeordnet sein, und der Rotorteil kann eine Topfform mit einem Topfmantelabschnitt aufweisen, der den scheibenförmigen Statorteil im Wesentlichen seitlich abdeckt bzw. diesen umschließt. Dabei können die Magnetelemente innenseitig im Topfmantelabschnitt angeordnet werden, wobei die Spulenelemente am Statorteil angeordnet sind. Werden Rotorteil und Statorteil parallel beabstandet zueinander montiert, so können sich die Spulenelemente und die Magnetelemente in radialer Richtung gegenüberstehen.

Der Statorteil kann ruhend am Strukturbauteil angeordnet sein, und der Rotorteil kann zur Anbindung des Drehkreuzes und insbesondere der Drehflügel ausgebildet sein, wobei die Drehflügel vorzugsweise direkt mit der äußeren Außenfläche des Rotorteils verbindbar sind. Insbesondere dann, wenn der Rotorteil scheibenförmig oder topfförmig ausgebildet ist, weist dieser einen flachen, insbesondere planen Bodenteil auf, der eine Außenfläche aufweist, die in Richtung der Drehflügel des Drehkreuzes weist. Somit kann auf besonders einfache Weise der Rotorteil mit dem Drehkreuz verbunden werden. Beispielsweise können die Drehflügel einzeln mit dem Rotorteil verbunden, insbesondere verschraubt werden.

Auch ist es denkbar, die Drehflügel zunächst starr miteinander zu verbinden, sodass ein Drehkreuz entsteht, und das Drehkreuz wird mit dem Rotorteil verbunden. Besonders vorteilhaft werden jedoch die Drehflügel einzeln mit dem Rotorteil verbunden, wobei Aufnahmeelemente, beispielsweise Aufnahmeprofile, vorgesehen sein können, über die die Drehflügel mit der Außenseite des Rotorteils verbunden werden.

Nach einer weiteren Variante kann der Vielpolmotor eine Abtriebswelle umfassen, die mit dem Rotorteil drehstarr verbunden ist und die sich in der Antriebsachse erstreckt, in der das Drehkreuz rotiert. Das Drehkreuz kann mit der Abtriebswelle verbunden werden, wofür insbesondere ein Adapterelement zum Einsatz kommen kann. Das Adapterelement kann beispielsweise ein Adapterkreuz bilden, und das Adapterkreuz bildet Aufnahmearme, an denen einzelne Drehflügel angebracht werden können.

Gemäß der erfindungsgemäßen Antriebseinheit weist der Vielpolmotor wenigstens eine Drehdurchführung auf, mittels der durch wenigstens eine elektrische Leitung elektrische Mittel im Vielpolmotor, insbesondere die Steuereinheit, mit einem mit dem Rotorteil drehenden Element, insbesondere mit dem Drehkreuz, elektrisch verbindbar ist. Die Drehdurchführung kann mit besonderem Vorteil im Vielpolmotor integriert angeordnet sein. Die im Vielpolmotor aufgenommene Steuereinheit wird vorzugsweise am Statorteil ruhend angeordnet, und um eine elektrische Verbindung zwischen dem rotierenden Drehkreuz und der ruhenden Steuereinheit zu schaffen, kann die Drehdurchführung vorgesehen sein, die insbesondere zwischen dem Rotorteil und dem Statorteil angeordnet werden kann. Weist der Vielpolmotor eine Abtriebswelle auf, so kann diese als Hohlwelle ausgeführt sein, und die Drehdurchführung kann innenseitig in der hohl ausgebildeten Abtriebswelle aufgenommen sein oder zumindest die elektrische Leitung kann durch die Hohlwelle verlaufen. Die elektrischen Leitungen können insbesondere durch die Hohlwelle in das Drehkreuz geführt werden, und im Drehkreuz können Sensoren, elektrische Schalter, Notschalter oder dergleichen angebracht sein, die über die sich zwischen dem Statorteil und dem Rotorteil befindende Drehdurchführung mit der elektrischen Steuereinheit auch während der Rotationsbewegung des Drehkreuzes elektrisch verbunden sind.

Der elektronisch kommutierte Vielpolmotor kann bodenseitig in die Karusselltür integriert werden, sodass sich der Vielpolmotor gemeinsam wenigstens abschnittsweise über die Höhe eines auf einem Rohbau aufgebauten Estrich erstreckt, mit besonderem Vorteil kann der elektronisch kommutierte Vielpolmotor jedoch an der Unterseite eines Strukturbauteils sichtbar angeordnet werden, das sich oberhalb des Drehkreuzes der Karusselltür befindet. Die Sichtbarkeit ist dabei insbesondere für sich im Drehkreuz befindliche Personen gegeben. Der sichtbare Teil des Vielpolmotors wird dabei insbesondere durch den scheibenförmigen oder topfförmigen Rotorteil gebildet, der mit besonderem Vorteil eine entsprechende Dekoroberfläche oder auch ein zusätzliches Blendenelement aufweisen kann. Ein weiterer Vorteil durch die sichtbare Anordnung des Vielpolmotors kann dadurch erreicht werden, dass beispielsweise Beleuchtungsmittel im Motor integriert werden können, beispielsweise kann der scheibenförmige oder topfförmige Rotorteil wenigstens teilweise aus einem lichttransparenten Material ausgebildet sein, und zwischen dem Statorteil und dem Rotorteil können Leuchtmittel angeordnet werden. Auch ist es denkbar, den scheibenförmigen Vielpolmotor mit einem Leuchtrand einzufassen, wobei mit besonderem Vorteil sämtliche Leuchtmittel durch Halbleiter-Leuchtmittel gebildet sein können.

Schließlich kann der Vielpolmotor noch einen Positions- oder Winkelgeber aufweisen, dieser dient der Kommutierung und Bestimmung von Winkelpositionen und der Drehgeschwindigkeit des Drehkreuzes.

Die vorliegende Erfindung richtet sich ferner auf eine Anordnung einer erfindungsgemäßen Antriebseinheit für eine Karusselltür mit einem elektronisch kommutierten Vielpolmotor mit einer Anzahl von Spulenelementen und mit einer Anzahl von Magnetelementen, wobei der Vielpolmotor eine flach ausgebildete Grundstruktur aufweist und einen scheibenförmigen oder topfförmigen Statorteil umfasst, der an einem ruhenden Strukturbauteil anordbar ist, und ferner aufweisend einen scheibenförmigen oder topfförmigen Rotorteil, der planparallel zum Statorteil angeordnet ist und der mit einem Drehkreuz der Karusselltür antreibend verbindbar ist, wobei die Spulenelemente und die Magnetelemente im Bereich zwischen dem Statorteil und dem Rotorteil aufgenommen sind. Zur Anordnung der Antriebseinheit kann ein Aufnahmetopf vorgesehen sein, mit dem die Antriebseinheit insbesondere wenigstens teilweise in das Strukturbauteil eingelassen an diesem angeordnet ist, wobei der Vielpolmotor im Aufnahmetopf aufgenommen ist. Der Aufnahmetopf kann einen Bodenbereich, einen Mantelbereich und insbesondere einen Kragenbereich umfassen, und der Kragenbereich kann sich in einer Ebene parallel zum Bodenbereich erstrecken. Der Bodenbereich muss dabei nicht zwangsläufig geschlossen ausgeführt sein, und der Aufnahmetopf kann auch einen offenen Boden umfassen, sodass in Abwandlung zu einem Aufnahmetopf ein Aufnahmering zur Aufnahme der Antriebseinheit gebildet sein kann.

Mit weiterem Vorteil kann die Antriebseinheit deckenseitig in der Karusselltür integriert sein, wobei unterseitig des Strukturbauteils wenigstens ein Unterdeckenelement angeordnet werden kann, das zumindest teilweise durch den Aufnahmetopf gehalten wird und als Dekorelement dienen kann. Insbesondere dann, wenn die Antriebseinheit nicht vollständig mit dem Aufnahmetopf im Strukturbauteil eingelassen wird, kann ein vertikaler Bereich zwischen dem Kragen des Aufnahmetopfes und der Unterseite des Strukturbauteils gebildet werden, in dem das Dekorelement angeordnet, insbesondere eingehängt oder eingeschoben wird.

Mit dem Aufnahmetopf kann die Antriebseinheit unmittelbar unter das Strukturbauteil montiert werden, wobei die Antriebseinheit auch teilweise in das Strukturbauteil eingelassen werden kann, sodass sich die Antriebseinheit mit einem Teil ihrer Bauhöhe in das Strukturbauteil hinein erstreckt. Nach einer weiteren Variante kann der Aufnahmetopf auch derart ausgestaltet sein, dass die Antriebseinheit mit ihrer gesamten Höhe im Strukturbauteil eingelassen ist.

Der Aufnahmetopf kann mit besonderem Vorteil dazu Verwendung finden, die Antriebseinheit auch nachträglich in eine bestehende Karusselltür anzuordnen, und zum Antrieb des Drehkreuzes einzusetzen. Dabei kann eine konventionelle, eine ein Motor und ein Getriebe umfassende Antriebseinheit demontiert werden, und zwischen dem Strukturbauteil, beispielsweise dem Deckenelement der Karusselltür, und dem Drehkreuz, kann mittels des Aufnahmetopfes die Antriebseinheit in die Karusselltür nachgerüstet werden.

Weiterhin richtet sich die Erfindung auf eine Karusselltür mit einer erfindungsgemäßen Antriebseinheit mit einem elektronisch kommutierten Vielpolmotor mit einer Anzahl von Spulenelementen und mit einer Anzahl von Magnetelementen, wobei der Vielpolmotor eine flach ausgebildete Grundstruktur aufweist und einen scheibenförmigen oder topfförmigen Statorteil umfasst, der an einem ruhenden Strukturbauteil angeordnet ist, und ferner aufweisend einen scheibenförmigen oder topfförmigen Rotorteil, der planparallel zum Statorteil angeordnet ist und der mit einem Drehkreuz der Karusselltür antreibend verbunden ist, wobei die Spulenelemente und die Magnetelemente im Bereich zwischen dem Statorteil und dem Rotorteil aufgenommen sind. Die in Zusammenhang mit der Antriebseinheit aufgeführten weiteren Merkmale und zugehörigen Vorteile finden für die Anordnung der Antriebseinheit sowie für die Karusselltür ebenfalls auf gleiche Weise Berücksichtigung.

Weiterhin richtet sich die Erfindung auf ein Verfahren zur Anordnung einer erfindungsgemäßen Antriebseinheit, wobei das Verfahren wenigstens die Schritte des Bereitstellens der Antriebseinheit, des Bereitstellens eines Aufnahmetopfes zur Aufnahme der Antriebseinheit, des Anordnens der Antriebseinheit an den Aufnahmetopf vor oder nach einem Anordnen des Aufnahmetopfes an ein oder in einem Strukturbauteil umfasst. Dabei kann insbesondere der Schritt des Anbindens eines Drehkreuzes und insbesondere von Drehflügeln an einen Rotorteil des Vielpolmotors vorgesehen werden.

### BEVORZUGTE AUSFÜHRUNGSBEISPIELE DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein erstes Ausführungsbeispiel einer Antriebseinheit in Anordnung an einem Strukturbauteil, wobei die Antriebseinheit als elektronisch kommutierter Vielpolmotor ausgeführt ist,
- Figur 2: ein erstes Ausführungsbeispiel einer Antriebseinheit in Anordnung an einem Strukturbauteil, wobei ein Drehkreuz mit mehreren Drehflügeln am Rotorteil des Vielpolmotors angeordnet ist,
- Figur 3: ein zweites Ausführungsbeispiel einer Antriebseinheit in Anordnung an einem Strukturbauteil, wobei die Antriebseinheit als elektronisch kommutierter Vielpolmotor ausgeführt ist,
- Figur 4: das zweite Ausführungsbeispiel einer Antriebseinheit in Anordnung an einem Strukturbauteil, wobei ein Drehkreuz mit einer Anzahl von Drehflügeln mittels eines Adapterelementes am elektronisch kommutierten Vielpolmotor angeordnet ist und
- Figur 5: eine perspektivische Ansicht einer Karusselltür mit einer Antriebseinheit gemäß der vorliegenden Erfindung.

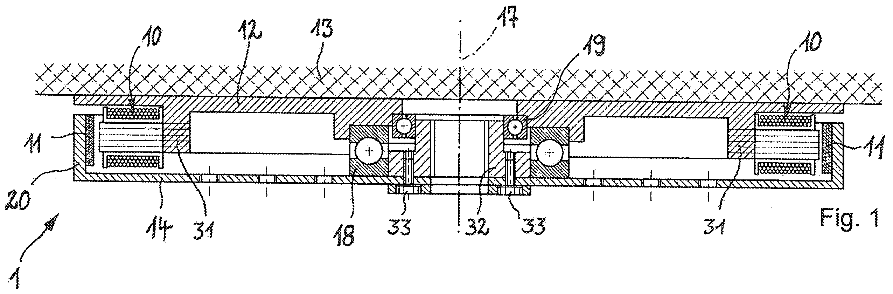

In Figur 1 ist ein Ausführungsbeispiel einer Antriebseinheit in Form eines Vielpolmotors 1 in einer Querschnittsansicht dargestellt. Die Antriebseinheit kann zum Antrieb eines Drehkreuzes einer Karusselltür Anwendung finden.

Die Antriebseinheit ist beispielhaft an der Unterseite eines Strukturbauteils 13 angeordnet und bildet einen elektronisch kommutierten Vielpolmotor 1 mit einer Anzahl von Spulenelementen 10, die mit einer Anzahl von Magnetelementen 11 korrespondieren. Die Spulenelemente 10 und die Magnetelemente 11 sind zwischen einem Statorteil 12 und einem Rotorteil 14 angeordnet. Der Statorteil 12 ist beispielhaft scheibenförmig ausgebildet und weist einzelne hervorstehende Bereiche auf. Der Rotorteil 14 ist topfförmig ausgebildet und besitzt einen umlaufenden Topfmantelabschnitt 20. Der Außenumfang des Topfmantelabschnittes 20 korrespondiert dabei mit dem abschließenden, umlaufenden Rand des etwa scheibenförmigen Statorteils 12. Dadurch, dass der Rotorteil 14 durch den Topfmantelabschnitt 20 topfförmig ausgebildet ist, entsteht zwischen dem Statorteil 12 und dem Rotorteil 14 ein Einbauraum, in dem die Spulenelemente 10 und die Magnetelemente 11 angeordnet sind.

Die Spulenelemente 10 sind an einem Strukturabschnitt 31 des Statorteils 12 angeordnet, und der Strukturabschnitt 31 ist als um die Antriebsachse 17 umlaufender Abschnitt ausgebildet und bildet so die Kreisbahn, an der über den Umfang verteilt eine Vielzahl von Spulenelementen 10 aufgenommen sind, wobei durch die Querschnittsdarstellung lediglich zwei Spulenelemente 10 beispielhaft gezeigt sind.

Die Magnetelemente 11 sind innenseitig im Topfmantelabschnitt 20 aufgenommen, und über dem Umfang des Rotorteils 14 verteilt befindet sich eine Vielzahl von Magnetelementen 11, die mit der Vielzahl der Spulenelemente 10 korrespondiert.

Durch die elektronische Kommutierung der Spulenelemente 10 können unter Ausnutzung verschiedener Bestromungsalgorithmen der Spulenelemente 10 auf der Kreisbahn umlaufende Magnetfelder erzeugt werden, welche von Spulenelement zu Spulenelement wandern können, wodurch ein Antriebsmoment zwischen den Spulenelementen 10 und den Magnetelementen 11 erzeugt wird. Durch die Anordnung der Spulenelemente 10 am Statorteil 12 und der Magnetelemente 11 am Rotorteil 14 wird durch die elektronische Kommutierung der Spulenelemente 10 ein Drehmoment zwischen dem Statorteil 12 und dem Rotorteil 14 erzeugt.

Zur drehbaren Aufnahme des Rotorteils 14 am Statorteil 12 ist ein Axiallager 18 und ein Radiallager 19 vorgesehen, wobei die Lager 18 und 19 ein Einsatzelement 32 drehbar am Statorteil 12 aufnehmen, und das Einsatzelement 32 ist über Schraubelemente 33 mit dem topfförmigen Rotorteil 14 drehstarr verbunden.

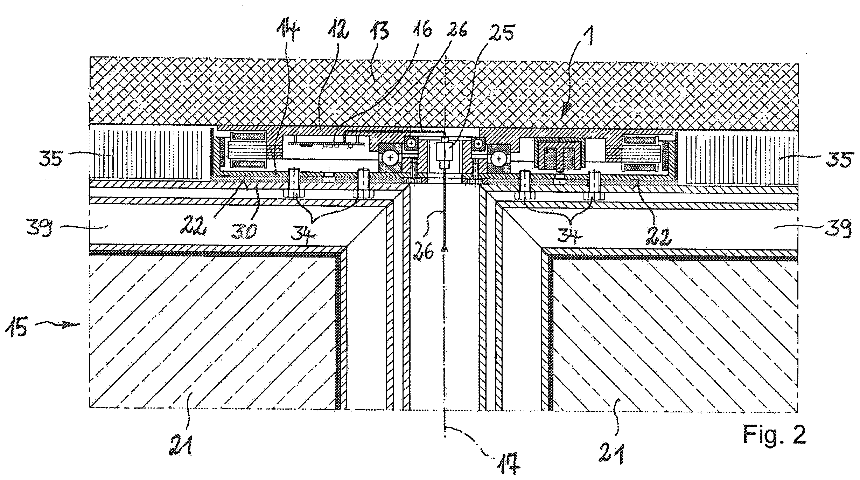

Der elektronisch kommutierte Vielpolmotor 1 weist eine flache, runde Grundstruktur auf und besitzt beispielhaft ein Verhältnis aus Höhe zu Durchmesser von ca. 1:10. Damit eignet sich die erfindungsgemäße Antriebseinheit besonders vorteilhaft zum Antrieb des Drehkreuzes einer Karusselltür, und die Antriebseinheit kann zwischen dem Drehkreuz und einem oberseitigen Strukturbauteil 13 oder auch zwischen dem Drehkreuz und einem bodenseitigen Strukturbauteil angeordnet werden, ohne wesentlichen Bauraum zu benötigen, wie in der folgenden Figur 2 näher dargestellt.

Figur 2 zeigt eine Anordnung einer Antriebseinheit an einem Strukturbauteil 13, wobei am topfförmigen Rotorteil 14 in der Antriebseinheit ein Drehkreuz 15 einer Karusselltür mit mehreren Drehflügeln 21 angeordnet ist. Der Rotorteil 14 besitzt eine in Richtung zum Drehkreuz 15 weisende Außenfläche 22 auf, und über Schraubelemente 34 sind die Drehflügel 21 mit dem Rotorteil 14 jeweils starr verbunden, wobei zwischen dem Rotorteil 14 und den Drehflügeln 21 ein Blendenelement 30 angeordnet ist.

Der Statorteil 12 des elektronisch kommutierten Vielpolmotors 1 ist auf nicht näher gezeigte Weise mit dem Strukturbauteil 13 an diesem haltend verbunden, wobei der Vielpolmotor 1 unterseitig am Strukturbauteil 13 angeordnet ist. Die geringe Bauhöhe der Antriebseinheit kann über Bürstenelemente 35 überbrückt werden, die außerhalb des Vielpolmotors 1 zwischen den Drehflügeln 21 und dem Strukturbauteil 13 angeordnet sind. Die Bürstenelemente 35 können dabei an den Drehflügeln 21 befestigt sein und am Strukturbauteil 13 schleifen.

Die Drehflügel 21 besitzen Rahmenprofile 39, über die die Drehflügel 21 mittels Schraubelementen 34 am Rotorteil 14 angebracht sind, und zwischen den Drehflügeln 21 und dem Rotorteil 14 ist ein Blendenelement 30 gezeigt, das als Dekorblende dienen kann.

Das Ausführungsbeispiel zeigt weiterhin eine Steuereinheit 16, die im Einbauraum zwischen dem Statorteil 12 und dem Rotorteil 14 angeordnet ist. Weiterhin gezeigt ist eine elektrische Leitung 26, die über eine Drehdurchführung 25 aus dem Drehkreuz 15 zur Steuereinheit 16 geführt ist. Die Drehdurchführung 25 erlaubt dabei eine elektrische Kontaktierung eines mit dem Drehkreuz 15 drehenden Abschnittes der elektrischen Leitung 26 mit einem im Statorteil 12 ruhenden Abschnitt der elektrischen Leitung 26. Beispielsweise kann über die elektrische Leitung 26 die Steuereinheit 16 mit Sensorelementen verbunden sein, die im Drehkreuz 15 aufgenommen sind und folglich um die Antriebsachse 17 mit dem Drehkreuz 15 mitrotieren.

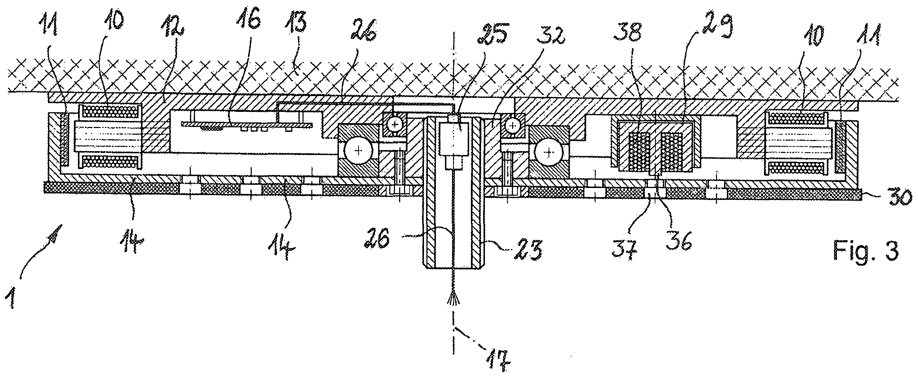

Figur 3 zeigt ein weiteres Ausführungsbeispiel der Antriebseinheit in einer unterseitigen Anordnung an einem Strukturbauteil 13. Die Antriebseinheit weist einen Statorteil 12 in einer im Wesentlichen scheibenförmigen Ausführung, und einen Rotorteil 14, der eine topfförmige Ausführung aufweist. Eine Anzahl von Spulenelementen 10 ist am Statorteil 12 angeordnet, und eine Anzahl von Magnetelementen 11 ist am Rotorteil 14 angeordnet, wobei sich die Magnetelemente 11 außenseitig der Spulenelemente 10 befinden. Am Rotorteil 14 ist ein weiteres Blendenelement 30 angeordnet.

Im Einbauraum zwischen dem Statorteil 12 und dem Rotorteil 14 befindet sich eine Steuereinheit 16, die mit einer elektrischen Leitung 26 verbunden ist, und die elektrische Leitung 26 ist durch eine Drehdurchführung 25 in einen ruhenden Teil und in einen um eine Antriebsachse 17 mitdrehenden Teil unterteilt. Die Drehdurchführung 25 ist im Vielpolmotor 1 und gemäß dem gezeigten Ausführungsbeispiel in einer Abtriebswelle 23 integriert.

Die Abtriebswelle 23 ist mit dem Einsatzelement 32 drehstarr verbunden. Die Abtriebswelle 23 ist beispielhaft als Vielkeilwelle ausgeführt und ein Drehkreuz 15 kann zum rotierenden Antrieb um die Antriebsachse 17 mit der Abtriebswelle 23 verbunden werden.

Im Einbauraum zwischen dem Statorteil 12 und dem Rotorteil 14 ist eine weitere Blockiereinrichtung 29 gezeigt, die am Statorteil 12 aufgenommen ist. Die Blockiereinrichtung 29 umfasst ein Blockierelement 36, das durch entsprechende Aktivierung eine Hubbewegung ausführen kann, um in einer Aufnahmeöffnung 37 im Rotorteil 14 zu verrasten. Um die Hubbewegung des Blockierelementes 36 auszulösen, umfasst die Blockiereinrichtung 29 eine Magnetspule 38, und wird diese bestromt, so übt das Blockierelement 36 eine Hubbewegung in die Aufnahmeöffnung 37 aus. Ist die Blockiereinrichtung 29 aktiviert, so wird eine Drehung des Rotorteils 14 relativ zum Statorteil 12 um die Antriebsachse 17 verhindert, sodass auch das mit dem Rotorteil 14 verbundene Drehkreuz 15 blockiert ist.

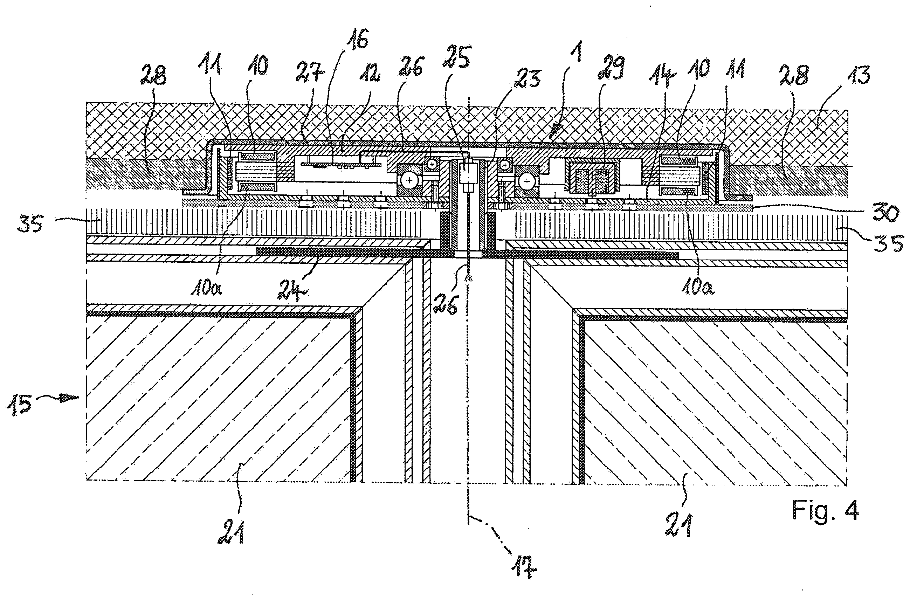

Das Ausführungsbeispiel der Antriebseinheit ermöglicht eine Verbindung des Drehkreuzes 15 der Karusselltür mit der Abtriebswelle 23, wie in der folgenden Figur 4 näher dargestellt.

Figur 4 zeigt das Ausführungsbeispiel der Antriebseinheit in einer Anordnung am Strukturbauteil 13 durch einen Aufnahmetopf 27, der als Montageadapter dient. Der Aufnahmetopf 27 ist dabei um ein bestimmtes Maß in das Strukturbauteil 13 eingelassen, und durch den Aufnahmetopf 27 sind ferner Unterdeckenelemente 28 unterseitig am Strukturbauteil 13 gehalten.

Zur Aufnahme des Vielpolmotors 1 im Aufnahmetopf 27 ist der Statorteil 12 mit dem Aufnahmetopf 27 starr verbunden, und der Rotorteil 14 ist mit der Abtriebswelle 23 drehstarr verbunden.

An die Abtriebswelle 23 schließt sich ein Adapterelement 24 an, das als Adapterkreuz ausgeführt ist und die Drehflügel 21 des Drehkreuzes 15 sind an den Armen des Adapterelementes 24 angeordnet. Das Drehkreuz 15 kann beispielhaft zwei, drei, vier oder mehr Drehflügel 21 aufweisen. Weiterhin gezeigt ist ein Blendenelement 30, das unterseitig am Rotorteil 14 angeordnet ist, wobei an der Oberkante der Drehflügel 21 Bürstenelemente 35 angeordnet sind, die den vertikalen Spalt zwischen den Drehflügeln 21 und der Unterseite der Unterdeckenelemente 28 im Wesentlichen überbrücken.

Werden die Wicklungskörper 10a der Spulenelemente 10 bestromt, so kann durch magnetische Wechselwirkung mit den Magnetelementen 11 zwischen dem Statorteil 12 und dem Rotorteil 14 ein Drehmoment erzeugt werden. Über die drehstarre Verbindung des Rotorteils 14 mit dem Drehkreuz 15 über die Abtriebswelle 23 kann das Drehkreuz 15 in Rotation versetzt werden. Dabei kann über die Steuereinheit 16 eine Steuerung des Betriebs der Antriebseinheit erfolgen, insbesondere auch unter Auswertung von Signalen, die über die elektrische Leitung 26 und die Drehdurchführung 25 an die Steuereinheit 16 abgegeben werden. Das Ausführungsbeispiel der Antriebseinheit zeigt ebenfalls eine Blockiereinrichtung 29, die auf gleiche Weise aktiviert werden kann, wie in Zusammenhang mit Figur 3 bereits beschrieben.

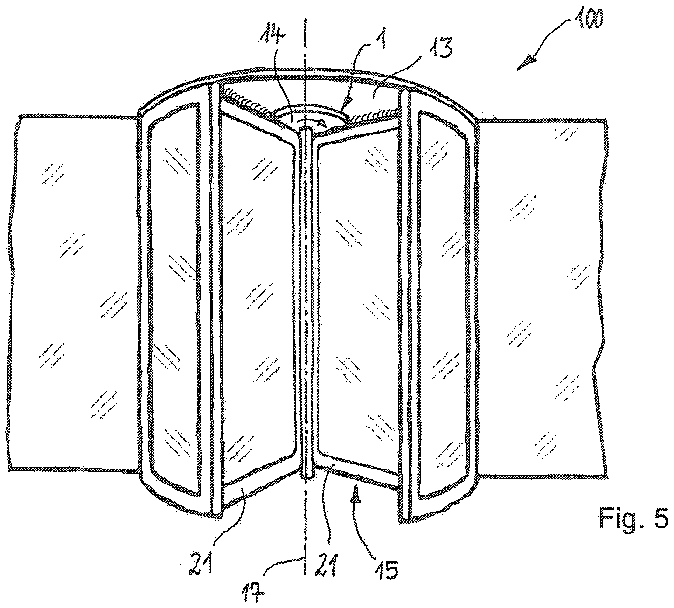

Figur 5 zeigt schließlich eine Ansicht einer Karusselltür 100 mit einem Drehkreuz 15, das um die Antriebsachse 17 rotieren kann. Die Karusselltür 100 weist ein Strukturbauteil 13 auf, das ein Deckelelement der Karusselltür 100 bildet, und unterseitig des Strukturbauteils 13 ist eine Antriebseinheit angeordnet, die erfindungsgemäß als elektronisch kommutierter Vielpolmotor 1 ausgeführt ist. Wird die Antriebseinheit aktiviert, so kann der sichtbare Teil, gebildet durch den Rotorteil 14, rotieren, wobei der Rotorteil 14 mit den Drehflügeln 21 des Drehkreuzes 15 verbunden ist. Die Darstellung zeigt die im Verhältnis zur Karusselltür 100 sehr flache Ausführung der Antriebseinheit 1, die ohne wesentliche konstruktive Anpassung zwischen dem Drehkreuz 15 und dem Strukturbauteil 13 integriert werden kann. Insbesondere ergibt sich der Vorteil, dass das Strukturbauteil 13 sehr flach ausgebildet werden kann, und oberseitig der Karusselltür 100 können sich auf nicht näher gezeigte Weise Fassadenelemente anschließen, ohne einen Bauraum für eine Antriebseinheit vorsehen zu müssen.

### Bezugszeichenliste

- 100: Karusselltür

- 1: Vielpolmotor

- 10: Spulenelement
- 10a: Wicklungskörper
- 11: Magnetelement
- 12: Statorteil
- 13: Strukturbauteil
- 14: Rotorteil
- 15: Drehkreuz
- 16: Steuereinheit
- 17: Antriebsachse
- 18: Axiallager
- 19: Radiallager
- 20: Topfmantelabschnitt
- 21: Drehflügel
- 22: Außenfläche
- 23: Abtriebswelle
- 24: Adapterelement
- 25: Drehdurchführung
- 26: elektrische Leitung
- 27: Aufnahmetopf
- 28: Unterdeckenelement
- 29: Blockiereinrichtung
- 30: Blendenelement
- 31: Strukturabschnitt
- 32: Einsatzelement
- 33: Schraubelement
- 34: Schraubelement
- 35: Bürstenelement
- 36: Blockierelement
- 37: Aufnahmeöffnung
- 38: Magnetspule
- 39: Rahmenprofil

## Patentansprüche

1. Antriebseinheit für eine Karusselltür (100) mit einem elektronisch kommutierten Vielpolmotor (1) mit einer Anzahl von Spulenelementen (10) und mit einer Anzahl von Magnetelementen (11), wobei der Vielpolmotor (1) eine flach ausgebildete Grundstruktur aufweist und einen scheibenförmigen oder topfförmigen Statorteil (12) umfasst, der an einem ruhenden, deckenseitigen Strukturbauteil (13) anordbar ist, und ferner aufweisend einen scheibenförmigen oder topfförmigen Rotorteil (14), der planparallel zum Statorteil (12) angeordnet ist und der mit einem Drehkreuz (15) der Karusselltür (100) antreibend verbindbar ist, wobei die Spulenelemente (10) und die Magnetelemente (11) im Bereich zwischen dem Statorteil (12) und dem Rotorteil (14) aufgenommen sind, **dadurch gekennzeichnet, dass**
das Verhältnis aus Höhe zu Durchmesser der im Wesentlichen runden, flach ausgebildeten Grundstruktur des elektronisch kommutierten Vielpolmotors (1) einen Wert von wenigstens 1:5, bevorzugt von wenigstens 1:8 aufweist, und wobei der Vielpolmotor (1) wenigstens eine Drehdurchführung (25) aufweist, mittels der durch wenigstens eine elektrische Leitung (26) elektrische Mittel im Vielpolmotor (1) mit einem mit dem Rotorteil (14) drehenden Element elektrisch verbindbar sind.

2. Antriebseinheit nach Anspruch 1 oder 2, **dadurch gekennzeichnet, dass** der Vielpolmotor (1) eine Steuereinheit (16) aufweist, die zwischen dem Statorteil (12) und dem Rotorteil (14) aufgenommen ist.

3. Antriebseinheit nach einem der Ansprüche 1 bis 2, **dadurch gekennzeichnet, dass** der Rotorteil (14) am Statorteil (12) um eine Antriebsachse (17) drehbar gelagert aufgenommen ist, insbesondere dass zwischen dem Statorteil (12) und dem Rotorteil (14) wenigstens ein Lager, insbesondere wenigstens ein Axiallager (18) und/oder wenigstens ein Radiallager (19), angeordnet ist.

4. Antriebseinheit nach einem der vorgenannten Ansprüche, **dadurch gekennzeichnet, dass** die Spulenelemente (10) relativ zu den Magnetelementen (11) radial innenliegend angeordnet sind.

5. Antriebseinheit nach einem der vorgenannten Ansprüche, **dadurch gekennzeichnet, dass** die Spulenelemente (10) Wicklungskörper (10a) aufweisen, die so am Statorteil (12) angeordnet sind, dass diese im Wesentlichen radial verlaufend zwischen dem Statorteil (12) und dem Rotorteil (14) ausgerichtet sind.

6. Antriebseinheit nach einem der vorgenannten Ansprüche, **dadurch gekennzeichnet, dass** die Spulenelemente (10) ruhend am Statorteil (12) angeordnet sind und dass der Rotorteil (14) eine Topfform mit einem Topfmantelabschnitt (20) aufweist, an dem die Magnetelemente (11) innenseitig angeordnet sind.

7. Antriebseinheit nach einem der vorgenannten Ansprüche, **dadurch gekennzeichnet, dass** der Rotorteil (14) zur Anbindung des Drehkreuzes (15) und insbesondere der Drehflügel (21) ausgebildet ist, wobei die Drehflügel (21) vorzugsweise direkt mit der äußeren Außenfläche (22) des Rotorteils (14) verbindbar sind.

8. Antriebseinheit nach einem der Ansprüche 1 bis 6, **dadurch gekennzeichnet, dass** eine Abtriebswelle (23) vorgesehen ist, die mit dem Rotorteil (14) drehstarr verbunden ist und die sich in der Antriebsachse (17) erstreckt, wobei das Drehkreuz (15) insbesondere mittels eines Adapterelementes (24) mit der Abtriebswelle (23) verbindbar ist.

9. Antriebseinheit nach einem der vorgenannten Ansprüche, **dadurch gekennzeichnet, dass** der elektronisch kommutierte Vielpolmotor (1) an der Unterseite des Strukturbauteils (13) sichtbar anordbar ist, wobei die Sichtbarkeit insbesondere für sich im Drehkreuz befindliche Personen gegeben ist.

10. Anordnung einer Antriebseinheit nach einem der vorgenannten Ansprüche an einer Karusselltür (100), wofür ein Aufnahmetopf (27) vorgesehen ist, mit dem die Antriebseinheit insbesondere wenigstens teilweise in das Strukturbauteil (13) eingelassen an diesem angeordnet ist, wobei der Vielpolmotor (1) im Aufnahmetopf (27) aufgenommen ist.

11. Anordnung nach Anspruch 10, **dadurch gekennzeichnet, dass** die Antriebseinheit deckenseitig in der Karusselltür (100) integriert ist, wobei unterseitig des Strukturbauteils (13) wenigstens ein Dekorelement (28) angeordnet ist, das zumindest teilweise durch den Aufnahmetopf (27) gehalten ist.

12. Karusselltür (100) mit einer Antriebseinheit nach einem der Ansprüche 1 bis 9 und insbesondere mit einer Anordnung einer Antriebseinheit gemäß Anspruch 10.

13. Verfahren zur Anordnung einer Antriebseinheit nach einem der Ansprüche 1 bis 9 an eine Karusselltür (100), wobei das Verfahren wenigstens die folgenden Schritte umfasst:
- Bereitstellen der Antriebseinheit,
- Bereitstellen eines Aufnahmetopfes (27) zur Aufnahme der Antriebseinheit,
- Anordnen der Antriebseinheit an den Aufnahmetopf (27) vor oder nach einem
- Anordnen des Aufnahmetopfes (27) an ein oder in einem Strukturbauteil (13).

14. Verfahren nach Anspruch 13, weiterhin **gekennzeichnet durch** den Schritt des Anbindens eines Drehkreuzes (15) und insbesondere von Drehflügeln (21) an einen Rotorteil (14) des Vielpolmotors (1).

## Claims

1. A drive unit for a revolving door (100) with an electronically commutated multi-pole motor (1) having a number of coil elements (10) and having a number of magnetic elements (11), wherein the multi-pole motor (1) comprises a flat basic structure and a disc-shaped or pot-shaped stator part (12), which can be arranged on a stationary, ceiling-side structural component (13), and further having a disc-shaped or pot-shaped rotor part (14), which is arranged plane-parallel to the stator part (12) and which can be connected to a turnstile (15) of the revolving door (100) in a driving manner, wherein the coil elements (10) and the magnetic elements (11) are received in the region between the stator part (12) and the rotor part (14), **characterized in that**
the ratio of height to diameter of the substantially round, flat basic structure of the electronically commutated multi-pole motor (1) has a value of at least 1:5, preferably at least 1:8, and wherein the multi-pole motor (1) has at least one rotary feedthrough (25), by means of which electrical means in the multi-pole motor (1) can be electrically connected to an element rotating with the rotor part (14) by way of at least one electrical line (26).

2. The drive unit according to claim 1 or 2, **characterized in that** the multi-pole motor (1) has a control unit (16) which is received between the stator part (12) and the rotor part (14).

3. The drive unit according to one of claims 1 to 2, **characterized in that** the rotor part (14) is received on the stator part (12) so as to be rotatably mounted about a drive axle (17), in particular **in that** at least one bearing, in particular at least one axial bearing (18) and/or at least one radial bearing (19) is arranged between the stator part (12) and the rotor part (14).

4. The drive unit according to one of the preceding claims, **characterized in that** the coil elements (10) are arranged radially inside relative to the magnetic elements (11).

5. The drive unit according to one of the preceding claims, **characterized in that** the coil elements (10) have winding bodies (10a) which are arranged on the stator part (12) such that they are aligned running substantially radially between the stator part (12) and the rotor part (14).

6. The drive unit according to one of the preceding claims, **characterized in that** the coil elements (10) are arranged resting on the stator part (12) and **in that** the rotor part (14) has a pot shape with a pot casing section (20) on which the magnetic elements (11) are arranged on the inside.

7. The drive unit according to one of the preceding claims, **characterized in that** the rotor part (14) is designed to connect the turnstile (15) and in particular the rotating blades (21), wherein the rotating blades (21) can preferably be directly connected to the outer surface (22) of the rotor part (14).

8. The drive unit according to one of claims 1 to 6, **characterized in that** an output shaft (23) is provided which is connected in a rotationally rigid manner to the rotor part (14) and which extends in the drive axle (17), wherein the turnstile (15) can be connected to the output shaft (23) in particular by means of an adapter element (24).

9. The drive unit according to one of the preceding claims, **characterized in that** the electronically commutated multi-pole motor (1) can be visibly arranged on the underside of the structural component (13), wherein there is visibility in particular for people located in the turnstile.

10. An arrangement of a drive unit according to one of the preceding claims on a revolving door (100), for which a receiving pot (27) is provided, with which the drive unit is arranged thereon in particular at least partially embedded in the structural component (13), wherein the multi-pole motor (1) is received in the receiving pot (27).

11. The arrangement according to claim 10, **characterized in that** the drive unit is integrated in the revolving door (100) on the ceiling side, wherein on the underside of the structural component (13) is arranged at least one decorative element (28), which is at least partially held by the receiving pot (27).

12. A revolving door (100) with a drive unit according to one of claims 1 to 9 and in particular with an arrangement of a drive unit according to claim 10.

13. A method for arranging a drive unit according to one of claims 1 to 9 on a revolving door (100), wherein the method comprises at least the following steps:
- providing the drive unit,
- providing a receiving pot (27) for receiving the drive unit,
- arranging the drive unit on the receiving pot (27) before or after
- arranging the receiving pot (27) on or in a structural component (13).

14. The method according to claim 13, further **characterized by** the step of connecting a turnstile (15) and in particular rotating blades (21) to a rotor part (14) of the multi-pole motor (1).

## Revendications

1. Unité d'entraînement pour une porte à tambour (100) comportant un moteur multipolaire (1) à commutation électronique comportant plusieurs éléments de bobine (10) et comportant plusieurs éléments magnétiques (11), dans laquelle le moteur multipolaire (1) présente un structure de base plate et comprend une partie stator (12) en forme de disque ou en forme de coupelle, qui peut être agencée sur un composant structurel (13) stationnaire côté plafond, et présentant en outre une partie rotor (14) en forme de disque ou en forme de coupelle, qui est agencée parallèlement au plan par rapport à la partie stator (12) et qui peut être reliée en entraînement à un tourniquet (15) de la porte à tambour (100), dans laquelle les éléments de bobine (10) et les éléments magnétiques (11) sont logés dans la zone située entre la partie stator (12) et la partie rotor (14), **caractérisée en ce que**
le rapport hauteur/diamètre de la structure de base sensiblement ronde et plate du moteur multipolaire (1) à commutation électronique présente une valeur d'au moins 1:5, de préférence d'au moins 1:8, et dans laquelle le moteur multipolaire (1) présente au moins une traversée rotative (25), au moyen de laquelle des moyens électriques dans le moteur multipolaire (1) peuvent être reliés électriquement à un élément tournant avec la partie rotor (14) par l'intermédiaire d'au moins une ligne électrique (26).

2. Unité d'entraînement selon la revendication 1 ou 2, **caractérisée en ce que** le moteur multipolaire (1) présente une unité de commande (16) qui est logée entre la partie stator (12) et la partie rotor (14).

3. Unité d'entraînement selon l'une des revendications 1 à 2, **caractérisée en ce que** la partie rotor (14) est reçue et montée rotative sur la partie stator (12) autour d'un axe d'entraînement (17), en particulier qu'entre la partie stator (12) et la partie rotor (14) au moins un roulement, en particulier au moins un roulement axial (18) et/ou au moins un roulement radial (19), est agencé.

4. Unité d'entraînement selon l'une des revendications précédentes, **caractérisée en ce que** les éléments de bobine (10) sont agencés radialement à l'intérieur par rapport aux éléments magnétiques (11).

5. Unité d'entraînement selon l'une des revendications précédentes, **caractérisée en ce que** les éléments de bobine (10) présentent des corps d'enroulement (10a) qui sont agencés sur la partie stator (12) de telle sorte qu'ils sont alignés sensiblement radialement entre la partie stator (12) et la partie rotor (14).

6. Unité d'entraînement selon l'une des revendications précédentes, **caractérisée en ce que** les éléments de bobine (10) sont agencés en appui sur la partie stator (12) et que la partie rotor (14) présente une forme de coupelle avec une section d'enveloppe de coupelle (20) sur laquelle les éléments magnétiques (11) sont agencés à l'intérieur.

7. Unité d'entraînement selon l'une des revendications précédentes, **caractérisée en ce que** la partie rotor (14) est conçue pour relier le tourniquet (15) et en particulier les pales rotatives (21), dans laquelle les pales rotatives (21) peuvent de préférence être reliées directement à la surface extérieure (22) externe de la partie rotor (14).

8. Unité d'entraînement selon l'une des revendications 1 à 6, **caractérisée en ce qu'**il est prévu un arbre de sortie (23) qui est relié de manière rigide en rotation à la partie rotor (14) et qui s'étend dans l'essieu d'entraînement (17), dans laquelle le tourniquet (15) peut être relié à l'arbre de sortie (23) en particulier au moyen d'un élément adaptateur (24).

9. Unité d'entraînement selon l'une des revendications précédentes, **caractérisée en ce que** le moteur multipolaire (1) à commutation électronique peut être agencé de manière visible sur la face inférieure du composant structurel (13), dans laquelle la visibilité est notamment assurée pour les personnes se trouvant dans le tourniquet.

10. Agencement d'une unité d'entraînement selon l'une des revendications précédentes sur une porte à tambour (100), pour laquelle est prévu une coupelle de réception (27), avec laquelle l'unité d'entraînement est agencée en particulier au moins partiellement encastrée dans le composant structurel (13), dans lequel le moteur multipolaire (1) est logé dans la coupelle de réception (27).

11. Agencement selon la revendication 10, **caractérisé en ce que** l'unité d'entraînement est intégrée côté plafond dans la porte à tambour (100), dans lequel au moins un élément décoratif (28) est agencé sur la face inférieure du composant structurel (13), qui est maintenu au moins en partie par la coupelle de réception (27).

12. Porte à tambour (100) comportant une unité d'entraînement selon l'une des revendications 1 à 9 et en particulier comportant un agencement d'une unité d'entraînement selon la revendication 10.

13. Procédé pour l'agencement d'une unité d'entraînement selon l'une des revendications 1 à 9 sur une porte à tambour (100), le procédé comprenant au moins les étapes suivantes :
- fourniture de l'unité d'entraînement,
- fourniture d'une coupelle de réception (27) pour loger l'unité d'entraînement,
- agencement de l'unité d'entraînement sur la coupelle de réception (27) avant ou après un
- agencement de la coupelle de réception (27) sur ou dans un composant structurel (13).

14. Procédé selon la revendication 13, en outre **caractérisé par** l'étape de liaison d'un tourniquet (15) et notamment de pales rotatives (21) à une partie rotor (14) du moteur multipolaire (1).
